# EUROPÄISCHE PATENTANMELDUNG

(11) **EP 3 542 647 A1**
(43) Veröffentlichungstag der Anmeldung: **25.09.2019**
(21) Anmeldenummer: 18163377.7
(22) Anmeldetag: 22.03.2018
(51) Int. Cl.: A23N 7/02, A47J 17/16

(54) **FRUCHTSCHÄLVORRICHTUNG**

(71) Anmelder: Lurch AG, 31137 Hildesheim (DE)
(72) Erfinder: VOGES, Jannik, 31157 Sarstedt (DE)
(74) Vertreter: Bremer, Ulrich

(57) **Zusammenfassung**

Die vorliegende Erfindung betrifft eine Fruchtschälvorrichtung mit einem in Rotation versetzbaren Halteteil auf dem das Schälgut zur Aufnahme von durch ein Schälmesser aufgebrachten Schälkräften drehfest fixiert ist. Die Aufgabe der Erfindung ist es eine derartige Vorrichtung zur Verfügung zu stellen, deren Halteteil mit Sicherheit ein Durchdrehen des Dorns in der Frucht während des Schälvorganges verhindert. Gelöst wird diese Aufgabe dadurch, dass das Halteteil (6) als Wendel (13) ausgebildet ist.

## Beschreibung

Die vorliegende Erfindung betrifft eine Fruchtschälvorrichtung gemäß dem Oberbegriff des Anspruchs 1.

Eine derartige Vorrichtung ist beispielsweise aus der DE 200 20 527 U1 bekannt. Das Halteteil für eine zu schälende Frucht ist hier als länglicher Dorn mit kreisförmigen Querschnitt ausgeführt, dessen freies Ende in einer Spitze endet. Im Bereich der Spitze ist der Dorn mit zwei radial abstehenden Flügeln versehen, die verhindern sollen, dass der Dorn aufgrund der auf die Frucht einwirkenden Schälkräfte in der Frucht durchdreht und somit die Frucht wegen einer fehlenden oder mangelhaften Relativbewegung zwischen Frucht und Schälmesser nicht mehr geschält bzw. nur mangelhaft geschält werden kann. Um das Durchdrehen des Dorns in der Frucht mit Sicherheit zu verhindern, sind die Flügel relativ großflächig auszuführen. Dadurch wächst allerdings der Widerstand beim anfänglichen Aufdrücken der Frucht auf den Dorn.

Aufgabe der vorliegenden Erfindung ist es, eine gattungsgemäße Fruchtschälvorrichtung zur Verfügung zu stellen, deren Halteteil mit Sicherheit ein Durchdrehen des Dorns in der Frucht während des Schälvorganges verhindert.

Diese Aufgabe wird erfindungsgemäß mit einer Fruchtschälvorrichtung gelöst, die die Merkmale des Anspruchs 1 aufweist.

Aufgrund der erfindungsgemäßen Ausführung des Halteteils treten keine punktuellen Belastungen auf, sondern die Kräfte werden durch den wendelförmigen Aufbau auf die radiale, axiale und tangentiale Ebene gleichmäßig verteilt. Darüber hinaus bleibt der durch das Halteteil angebohrte Fruchtkern einstückig zusammen. Dies und die Hinterschneidung des spiralförmigen Aufbaus des Halteteils geben dem Halt des Halteteils im Fruchtfleisch vielmehr Stabilität, so dass ein Durchdrehen des Halteteils in der Frucht mit Sicherheit vermieden wird.

In vorteilhafter Ausgestaltung der Erfindung weist die Wendel eine große Steigung auf, die regelmäßig oder unregelmäßig ausgeführt sein kann. Die große Steigung hat zum einen den Vorteil, dass der Einbohrvorgang des Halteteils in das Fruchtfleisch zügig von statten geht und zum anderen den Vorteil, dass das Fruchtfleisch durch die relativ weit auseinander liegenden Einschnitte nur minimal geschwächt wird.

In einer weiteren vorteilhaften Ausgestaltung der Erfindung nimmt der Flankendurchmesser der Wendel zum freien Ende hin ab. Diese Ausführung erleichtert den Einbohrvorgang des Halteteils in das Fruchtfleisch, da sich der Einschnittdurchmesser im Fruchtfleisch sukzessiv vergrößert.

Die Erfindung wird nachstehend anhand eines Ausführungsbeispieles näher erläutert. In der dazugehörigen Zeichnung zeigt:
- Fig. 1: einen perspektivischen Blick auf eine Fruchtschälvorrichtung, und
- Fig. 2.1-2.3: verschiedene Ansichten eines Halteteils der Vorrichtung.

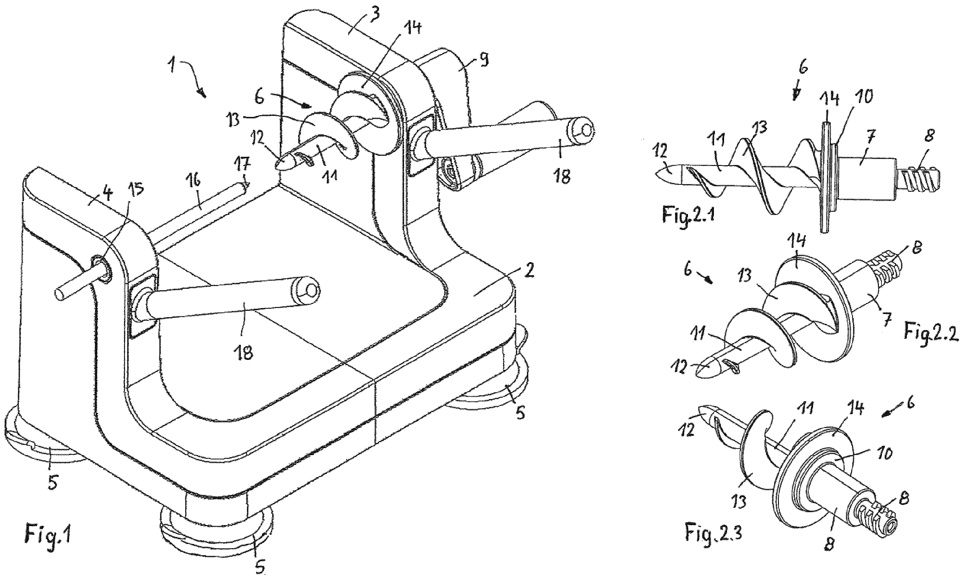

Figur 1 zeigt eine Fruchtschälvorrichtung 1 mit einer Basis 2, von der senkrecht nach oben parallel zueinander zwei Wangen 3 und 4 abragen. Auf der Unterseite der Basis 2 sind jeweils in den Eckbereichen Saugfüße 5 vorgesehen, mit denen die Fruchtschälvorrichtung 1 sicher an einer Unterlage festgelegt werden kann.

In der Wange 3 ist drehbar ein Halteteil 6 gelagert, welches in Einzeldarstellung und verschiedenen Perspektiven in den Figuren 2.1 bis 2.3 gezeigt ist. Das Halteteil 6 weist einen Wellenstumpf 7 mit zylindrischen Querschnitt auf, der in einer entsprechenden aus der Zeichnung nicht ersichtlichen Aufnahmeöffnung der Wange 3 mit geringem radialem Spiel drehbar gelagert ist. An den Wellenstumpf 7 schließt sich auf einer Seite des Halteteils 6 ein Gewindebolzen 8 an, auf den eine Kurbel 9 aufgeschraubt werden kann. Über die Kurbel 9 kann in Aufschraubrichtung ein Drehmoment auf das Halteteil 6 übertragen werden.

Dem Schraubenbolzen 8 gegenüberliegend schließt sich an den Wellenstumpf 7 eine Anschlagscheibe 10 an, mit der das Halteteil 6 im montierten Zustand an der Wandung der Wange 3 anliegt, womit die Einstecktiefe des Wellenstumpfes 7 in die Wange 3 begrenzt. Auf dem den Schraubenbolzen 8 abgewandten Ende des Halteteils 6 erstreckt sich koaxial mit dem Schraubenbolzen 8 und dem Wellenstumpf 7 ein langgestreckter Dorn 11 mit kleinem Durchmesser und zylindrischem Querschnitt. Der Dorn 11 endet an seinem freien Ende mit einer Spitze 12. Auf dem Dorn 11 ist eine Wendel 13 ausgebildet. Diese beginnt an einer Fruchtanlagescheibe 14 mit einem großen Flankendurchmesser, der sich zur Spitze 12 des Dorns 11 hin verringert. Die Wendel 13 ist mit einer großen Steigung ausgestattet.

Mit der oben beschriebenen Fruchtschälvorrichtung 1 wird wie folgt gearbeitet:
Eine zu schälende Frucht wird zu Beginn auf den Dorn 11 des Halteteils 6 aufgeschoben, wobei dessen Spitze 12 das Eindringen in das Fruchtfleisch erleichtert. Gleichzeitig mit dem Aufdrücken der Frucht auf den Dorn 11 wird die Kurbel 9 betätigt, wodurch sich die Wendel 13 des Halteteils 6 bei mit einer Hand drehfest gehaltener Frucht soweit in das Fruchtfleisch einbohrt, bis ein Ende der Frucht an der Fruchtanlagescheibe 14 anliegt. Die zu schälende Frucht sitzt jetzt fest auf dem Halteteil 6 und dreht sich beim Betätigen der Kurbel 9 entsprechend mit.

Um eine zu schälende Frucht während des Schälvorganges auch an ihrem dem Halteteil 6 abgewandten Ende zu stabilisieren, ist in der Wange 4 ein Lagerloch 15 vorgesehen, durch die ein Stift 16 in koaxialer Ausrichtung zum Dorn 11 des Halteteils 6 hindurchgesteckt werden kann. Der Stift 16 endet an seinem dem Dorn 11 zugewandten Ende mit einer Spitze 17.

Der Stift 16 wird, nachdem die Frucht auf dem Halteteil 6 befestigt ist, von der anderen Seite in die Frucht eingedrückt, wobei die Spitze 17 dieses Eindringen erleichtert. Die Oberfläche des Stiftes 16 ist glatt, so dass sich die zu schälende Frucht auf dem Stift 16 drehen kann, während sie am Halteteil 6 drehfest gelagert ist.

Von den Wangen 3 und 4 ragt jeweils eine Stange 18 im gleichen Winkel schräg nach oben ab. Die Stangen 18 sind parallel zueinander ausgerichtet. Sie dienen der Führung eines nicht dargestellten Schälmessers, welches an den Stangen 18 einer zu schälenden Frucht per Hand zugestellt werden kann. Das Schälen einer Frucht erfolgt dann durch Drehen der Kurbel 9 sowie Andrücken des Schälmessers an die Fruchtoberfläche.

## Patentansprüche

1. Fruchtschälvorrichtung mit einem in Rotation versetzbaren Halteteil auf dem das Schälgut zur Aufnahme von durch ein Schälmesser aufgebrachten Schälkräften drehfest fixiert ist, **dadurch gekennzeichnet, dass** das Halteteil (6) als Wendel (13) ausgebildet ist.

2. Fruchtschälvorrichtung nach Anspruch 1, **dadurch gekennzeichnet, dass** die Wendel (13) eine große, regelmäßige oder unregelmäßige Steigung aufweist.

3. Fruchtschälvorrichtung nach Anspruch 1 oder 2, **dadurch gekennzeichnet, dass** der Flankendurchmesser der Wendel (13) zum freien Ende hin abnimmt.
